# EUROPEAN PATENT SPECIFICATION

(11) **EP 2 803 258 B1**
(45) Date of publication and mention of the grant of the patent: **14.03.2018**
(21) Application number: 13382180.1
(22) Date of filing: 15.05.2013
(51) Int. Cl.: A01D 87/12, A01D 85/00, A01D 90/08

(54) **MACHINE FOR STACKING BALES**
MASCHINE ZUM STAPELN VON BALLEN
MACHINE PERMETTANT D'EMPILER DES BALLES

(43) Date of publication of application: 19.11.2014
(73) Proprietor: Arcusin S.A., 25245 Vila-Sana (ES)
(72) Inventor: CUSINE BARBER, Manuel, 25245 Vila-Sana (ES)
(74) Representative: Oficina Ponti, SLP

(56) References cited:
- DE-A1- 2 331 868
- DE-A1- 3 924 490
- FR-A2- 2 319 554
- GB-A- 1 504 888
- US-A1- 2006 245 880

## Description

### Background of the invention

Accumulators that group hay bales to facilitate handling or transport thereof from the field to a storage location are available in the market. However, most of these accumulators are destined for grouping small prismatic bales.

In order to group large prismatic bales, there are accumulators that comprise a horizontal platform whereon three bale packages are formed, which is then tilted to deposit and unload the three packages onto the ground. These accumulators have the drawback of being complicated to handle, as the horizontal platform requires a large amount of space.

Patent DE19954487 discloses a large prismatic bale accumulator having the advantage over the other accumulators in the market that it dispenses with the aforementioned horizontal platform and is capable of vertically stacking the bales by lifting them directly off the ground.

The accumulator of the aforementioned patent DE19954487 comprises a frame configured to be towed and positioned over a hay bale resting on the ground in a field. This frame includes a clamp for holding and vertically lifting the bale from a lower stacking position to an upper stacking position. Once the bale is disposed in this upper stacking position, the accumulator moves until the frame is positioned over a new bale, in such a manner that the bale suspended by the clamp can be deposited on top of the new bale so as to form a stack.

However, it has been proven that the accumulator of the aforementioned patent has several drawbacks. One of said drawbacks lies in the fact that it works at a very slow rate, as the accumulator must stop over an incoming bale long enough for the clamp's gripping arms to descend and grip the bale. Also, in many cases the tractor operator must have sufficient expertise to ensure that the bale entering the frame is centered with respect to the clamp's arms, as otherwise the bale itself will prevent the clamp from descending to the loading position. This results in a slower work pace, which negatively affects accumulator performance.

### Description of the invention

The objective of the present invention is to resolve the aforementioned drawbacks by developing an accumulator for grouping small or large hay bales which has the following advantages.

In accordance with this objective, the present invention provides a hay bale accumulator that comprises a frame configured to be dragged and positioned over a hay bale resting on the ground, said frame comprising means for holding and vertically lifting said bale off the ground to an upper stacking position, and is characterised in that said means for vertically lifting the bale include at least one pair of vertical slide carriages of said bale holding means, said carriages being disposed in opposition to each other on the sides of a bale holding compartment of said frame, said accumulator also comprising means for suspending said bale in said upper stacking position while said carriages move towards a lower loading position in the interior of said compartment to receive a new bale, the entrance of said compartment being susceptible of becoming free to receive said new bale while said slide carriages remain on standby.

The accumulator of the present invention has the advantage over the other accumulators in the state of the art that it allows vertical stacking of the bales, lifting them directly off the ground at a very fast work pace, without need to stop the accumulator.

In the accumulator of the present invention, the carriages that include the means for holding the bales are disposed in opposition to each other on the sides of a bale holding compartment awaiting an incoming bale. As a result, when the frame is disposed over a hay bale, the holding means act almost immediately, gripping the bale and moving it vertically to the upper stacking position where the bale is suspended.

Therefore, as opposed to the accumulator of patent application DE19954487, in the accumulator claimed the carriages do not have to ascend to an upper position to allow entry of a bale nor do they subsequently have to descend to a lower position in order to hold and lift the same bale, but rather said carriages can wait for a bale, without interfering with the entry thereof in the compartment.

Additionally, in the present invention the carriages can descend to the lower loading position in order to hold and lift the last incoming bale while the previously loaded bale remains suspended.

In the accumulator of patent DE19954487, this stacking process is not possible, as there are no means for suspending the bales and when the carriages are in a lower loading position, the carriages themselves will prevent the entry of a new bale in the compartment.

According to one embodiment, the bale holding means comprise at least two gripping arms joined in an articulated manner to each of said slide carriages, said arms being susceptible of being extended to come into contact with said bale when said bale enters said compartment.

The gripping arms have the peculiarity that they are retracted to free the entrance and are extended to come into contact with the bale when said bale enters the compartment.

These gripping arms are configured in the manner of clamps and can optionally include spikes that are introduced or driven into the bale to hold it.

According to the same embodiment, the means for suspending the bale in the upper stacking position comprise at least two grasping arms joined in an articulated manner to structures on the sides of the bale holding compartment of said frame, said arms being susceptible of being extended to grasp said bale when said bale is in the upper stacking position.

Also according to the same embodiment, said accumulator comprises at least one pair of slide rails of said carriages vertically disposed in opposition to each other on the structures on the sides of said compartment, said rails allowing said carriages to move from said lower loading position to said upper stacking position and vice versa.

Therefore, as opposed to the accumulators of the state of the art, the weight of the stack rests on the structures on the sides of the compartment. In the accumulator of DE19954487, the weight of the stack is cantilevered, making it more unstable.

Also, this configuration with lateral carriage slide rails has the advantage over the accumulator of DE19954487 that it considerably reduces total accumulator height, as the carriages can be disposed at a lower height without interfering with the entry of the bale.

Preferably, the accumulator comprises a rear stopper to hold the bales in the interior of said compartment while said accumulator is towed by a tractor and, advantageously, said rear stopper includes at least one door that is joined in an articulated manner to the exit of said compartment, said door being susceptible of being opened to release a stack of bales from the interior of said compartment while said accumulator is being towed by the tractor.

This rear stopper pushes the incoming bale to the interior of the compartment, dragging it along the ground long enough for the bale to be held by the carriage gripping arms. When the stack is unloaded, the door opens to release the load. Therefore, the stacking process can be carried out in a continuous manner without need to stop the tractor, thereby improving performance.

Preferably, the accumulator comprises a draw bar to join said frame to the drive train of said tractor in an articulated manner, said accumulator being susceptible of being misaligned with respect to the tractor to facilitate the entry of a bale in the interior of said compartment.

Advantageously, said frame comprises a structure disposed in a bridge-like manner between the structures on the sides of said compartment, said structure determining the upper limit of the entry to said compartment in a bridge-like manner.

Preferably, said accumulator comprises means for guiding the bales on entering the bale holding compartment of the frame.

According to one embodiment, said bale guiding means comprise a pair of guides disposed horizontally on either side of said compartment and, optionally, at least a second guide that projects from the compartment to guide the bales to the entrance of the compartment while the accumulator is being towed by the tractor.

This second guide could be disposed, for example, on the draw bar that joins the frame to the tractor.

The aforementioned guides facilitate the entry and correct positioning of the bale in the interior of the compartment while the accumulator is being towed by the tractor, allowing a very fast work pace.

The accumulator of the present invention is specially designed to collect and vertically stack large hay bales directly from the field or meadow where the bales are resting. As a result, the accumulator dispenses with horizontal or intermediate loading platforms, due to which it is very simple and easy to operate. In addition, the vertical stacking facilitates subsequent loading onto trailers or trucks.

Additionally, this accumulator works at a very fast pace in the field, as the stacks are formed and unloaded continuously while being towed and the frame being positioned consecutively over the hay bales resting in the field.

Further, the guides that guide the bales allow the loading operation to always be carried out ensuring the correct position of the bale package and, thus, stack stability.

### Brief description of the drawings

In order to better understand the foregoing, drawings have been attached where an embodiment has been represented schematically and by way of non-limiting example:

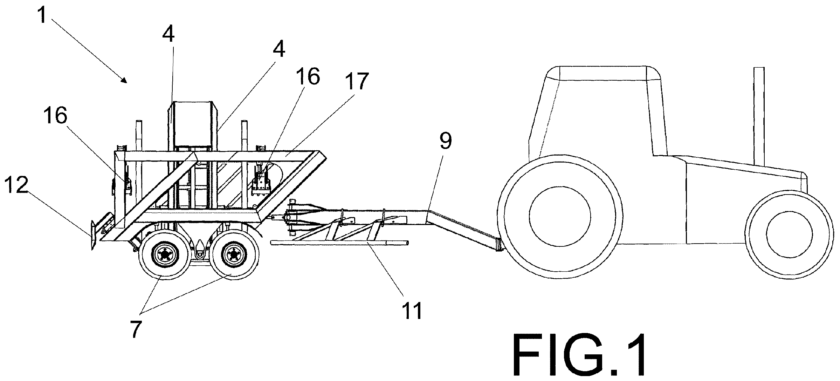

Figure 1 shows an elevational view of one side of the accumulator.
Figure 2 shows a top plan view of the accumulator of figure 1.

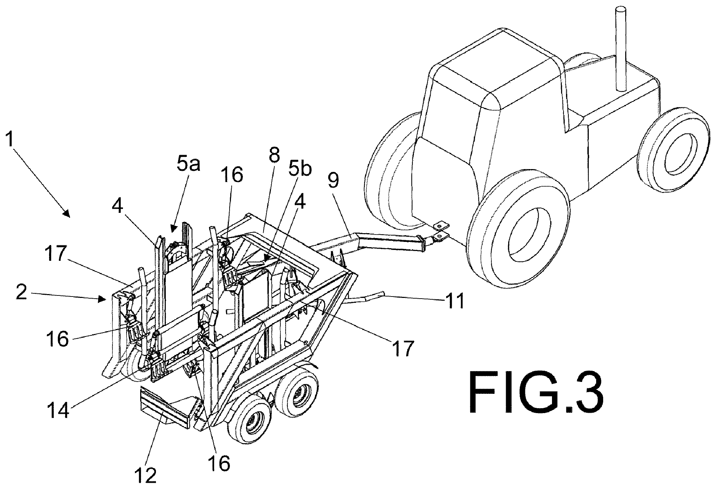

Figure 3 shows a perspective view of the rear of the accumulator of figure 1.
Figures 4 to 8 show various perspective and elevational views of the loading cycle of a stack formed by the accumulator of figure 1.
Figure 9 shows a perspective view of the accumulator during unloading of a stack.

### Description of a preferred embodiment

Following is a description of the accumulator (1) of the present invention, making reference to the foregoing figures.

The accumulator (1) claimed includes a frame (2) configured to be towed and positioned over a hay bale (3) resting directly on the ground in a field.

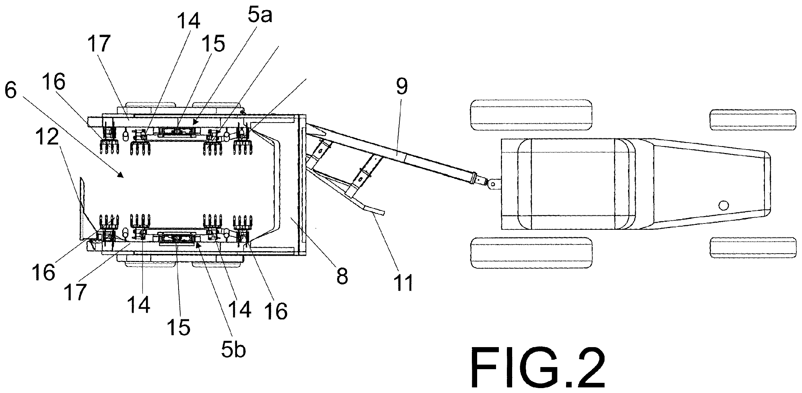

The frame (2) includes a pair of carriage (5a, 5b) slide guides (4) vertically disposed in opposition to each other on the sides of a bale (3) holding compartment (6) of the frame (2). In the embodiment described, the guides (4) are disposed in opposition to structures on the sides (17) of the compartment (6) that rest on the drive train of the wheels (7). As can be observed in figure 2, these wheels (7) and the carriages (5a, 5b) are disposed centered in an intermediate position that facilitates the load balancing of the structures (17) on the sides of the frame (2).

The same frame (2) comprises a structure (8) disposed in a bridge-like manner between the structures (17) on the sides of the compartment (6). This structure (8) defines the upper limit of the entrance of the bale (3) holding compartment (6).

The frame (2) is joined to the drive train of a tractor in an articulated manner by means of a draw bar (9). In this manner, the operator can misalign the accumulator (1) with respect to the tractor in a working position that facilitates the entry of the bales (3) in the interior of the compartment (6).

The sides of the bale (3) holding compartment (6) of the frame (2) include horizontally disposed guides (10) for positioning the bales (3). As can be observed in the top plan view of figure 2, in addition to the guides (10) of the interior of the compartment (6), the accumulator (1) includes a second guide (11) that projects from the compartment (6) to guide the bales (2) towards the entrance while the accumulator (1) is being towed by the tractor.

A swinging door (12) has been envisaged at the rear of the compartment (6) of the frame (2) which acts as a rear stopper when closed in order to grasp the bales (3) in the interior of the compartment (6) while the accumulator (1) is being towed by the tractor.

This door (12) is joined in an articulated manner to the exit of the compartment (6) and is actuated by a fluid dynamic cylinder to allow the exit and unloading of the bales (3) that form the stack (13).

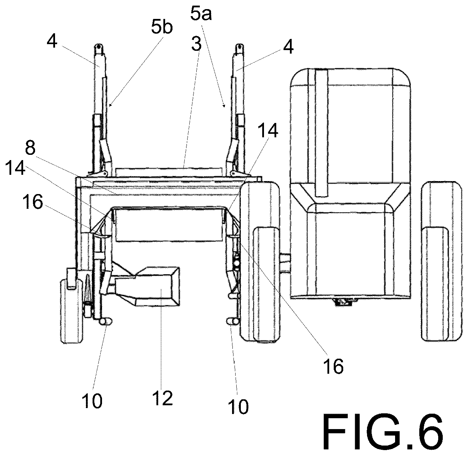

The bale (3) holding means are joined to the slide carriages (5a, 5b). In the embodiment being described, these holding means are configured by two gripping arms (14) which can move simultaneously on actuating the carriages (5a, 5b) in order to hold and lift a bale (3) in the interior of the compartment (6). The carriages (5a, 5b) are actuated by means of a pair of fluid dynamic cylinders (15) mounted on the slide rails (4) of the carriages (5a, 5b). The gripping arms (14) are joined to their respective carriage (5a, 5b) in an articulated manner in such a manner that they are susceptible of being extended to come into contact with a bale (3) when said bale (3) is in the interior of the compartment (6) (see figure 6).

As already mentioned in the description of the invention, the accumulator (1) comprises means for suspending a bale (3) in the upper stacking position while the carriages (5a, 5b) move towards a lower stacking position to receive a new bale (3).

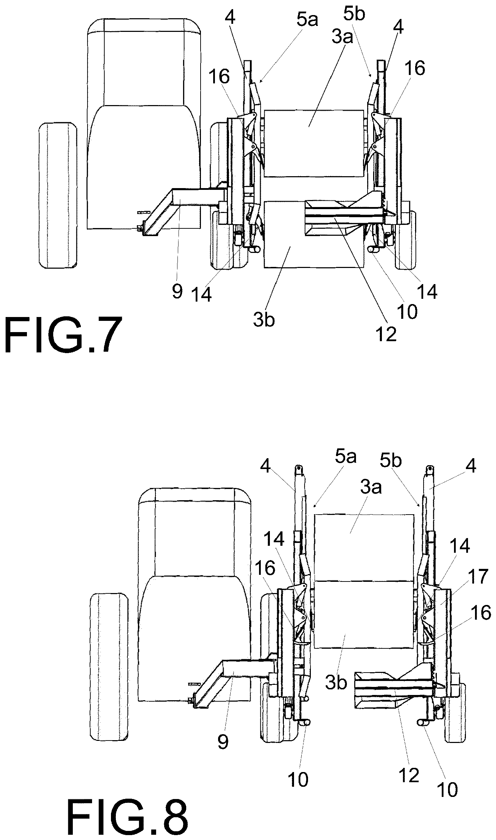

These suspension means are configured by two grasping arms (16) joined in an articulated manner to the structures on the sides (17) of the frame (2) and are susceptible of being extended to hold a bale (3) in the aforementioned upper stacking position (see figure 7).

In the embodiment being described, both the gripping arms (14) and the grasping arms (16) are configured in the manner of a clamp. However, these arms (14, 16) can be configured, for example, in the manner of spikes or other type of appropriate means for holding the bales (3).

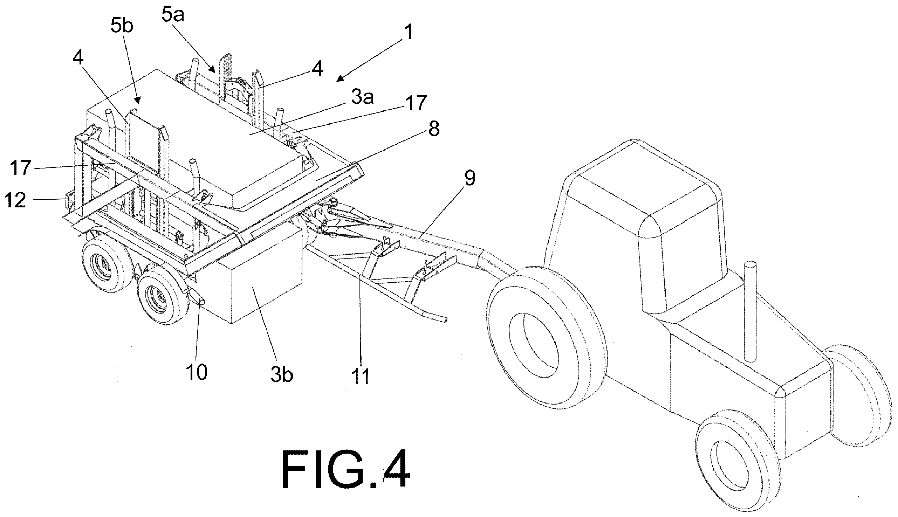

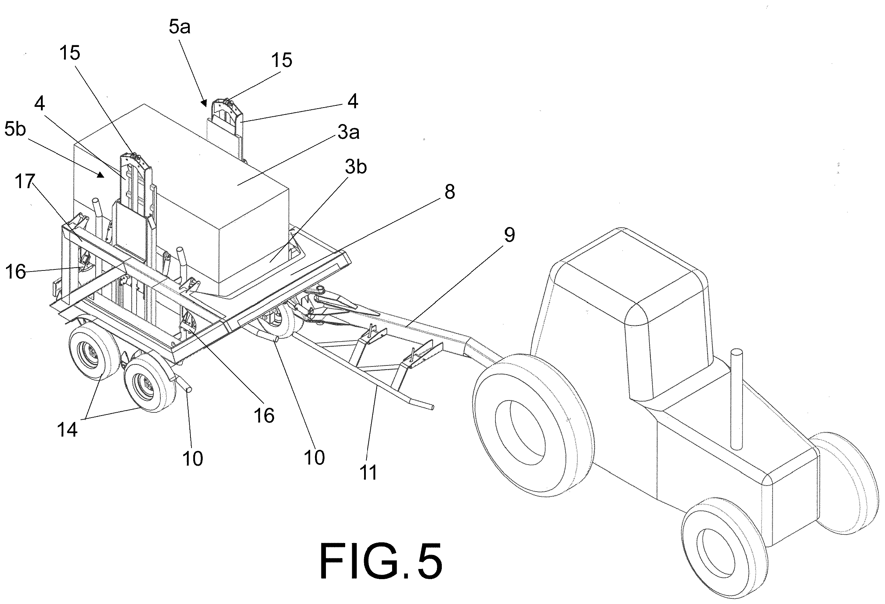

Following is a description of the operation of the accumulator (1), making reference to figures 4 to 9, which describe a loading and unloading cycle of the accumulator (1).

The accumulator (1) moves along the road completely aligned with the tractor. On arriving at the field, the frame (2) moves by means of the draw bar (9) to adopt a working position wherein it becomes misaligned in order to facilitate the entry of the bales (3) in the interior of the compartment (6) of the frame (2).

As the accumulator (1) moves forward and encounters the first bale (3a) which is resting on the ground in the field, the guides (10, 11) guide the bale (3a) to position it in the interior of the compartment (6), until stopping against the swinging door (12) located at the rear of the compartment (6).

While the accumulator (1) moves forward, the bale (3a) is grasped momentarily in the interior of the compartment (6) by the door (12) which acts as a rear stopper. Simultaneously, the gripping arms (14) are vertically extended so that they come into contact with the bale (3a) to hold it. Next, the carriages (5a, 5b) are simultaneously actuated to vertically move the gripping arms (14) in order to lift the bale (3a) to a predetermined upper stacking position. In this position, the grasping arms (14) can descend to the lower loading position to await a new bale (3b).

Next, without stopping the accumulator (1), the frame (2) moves over a second bale (3b) that enters the compartment (6) and is positioned beneath the first bale (3a), which is suspended in the upper stacking position.

Figure (7) shows this upper stacking position wherein the first bale (3a) is suspended by the grasping arms (16) of the structures on the sides (17) of the frame (2), while the gripping arms (14) hold a new bale (3b) disposed at the lower loading position of the compartment (6).

Once the second bale (3b) is held in place, the carriages (5a, 5b) ascend to approximate the second bale (3b) to the first bale (3a) and form a stack (13). Next, the grasping arms (16) are extended to deposit the first bale (3a) on top of the second bale (3b). In this position, the first bale (3a) rests on the second bale (3b), forming a stack (13) so that the arms (14) of the carriages (5a, 5b) can descend to the lower loading position (see figure 8).

At this point, without stopping the accumulator (1), the operator may choose between releasing the stack (13) of the two bales (3a, 3b) and opening the door (12) or starting a new loading cycle, collecting a third bale (3c) located inside the compartment (6). In this second case, the operator must move the carriages (5a, 5b) to the upper position, raising the stack (13) and then actuating the grasping arms (16) to hold the stack (13) and release the gripping arms (14) so that these can descend to the lower position to deliver a new bale (3c).

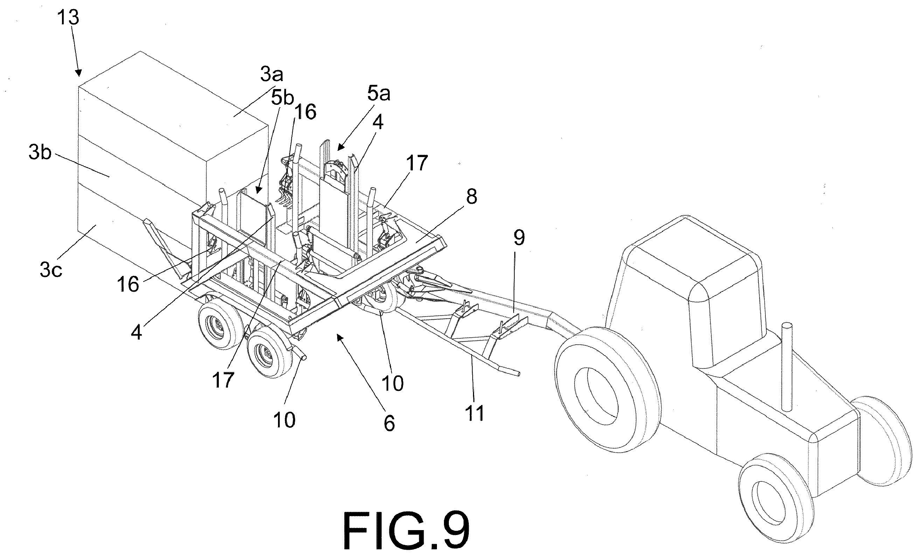

Figure 9 shows the unloading of a stack (13) of three bales (3a, 3b, 3c) formed in the interior of the compartment (6). When the accumulator (1) is in the forward position and the bale (3) package of the stack (13) is stopped on the ground, the load is automatically evacuated.

In order to unload the stack (13) on a nearby path or in a specific loading area, the accumulator (1) is transferred to the desired unloading place with the load suspended in its interior.

Despite the fact that reference has been made to a specific embodiment of the invention, it is evident to a person skilled in the art that the described accumulator (1) is susceptible of numerous variations and modifications, and that all the aforementioned details may be substituted for other, technically equivalent ones without detracting from the scope of protection defined by the attached claims.

## Claims

1. Hay bale (3) accumulator (1) comprising a frame (2) configured to be towed and positioned over a hay bale (3) resting on the ground, said frame (2, 17) comprising means for holding and vertically lifting a bale (3a) off the ground to an upper stacking position, **characterised in that** said means (5, 14, 15) for vertically lifting the bale (3a) include at least one pair of vertical slide carriages (5a, 5b) of said bale holding means (14), said carriages (5a, 5b) being disposed in opposition to each other on the sides of a bale (3) holding compartment (6), said bale holding means comprising at least two gripping arms (14), each of which is joined in an articulated manner to each of said slide carriages (5a), said gripping arms (14) being susceptible of being extended to come into contact with said bale (3) when said bale (3) enters the interior of said compartment (6), the accumulator also comprising means (16) for suspending said bale (3a) in said upper stacking position in the interior of said compartment (6) while said carriages (5a, 5b) move towards a lower loading position to receive a new bale (3b), said gripping arms being susceptible of being retracted to free the entrance of said compartment (6) to receive said new bale (3b) while said slide carriages (5a, 5b) remain on standby in the lower loading position.

2. Accumulator (1), according to claims 1, wherein said means for suspending the bale in the upper stacking position comprise at least two grasping arms (16) joined in an articulated manner to structures (8) on the sides of the bale (3) receiving compartment (6) of said frame (2, 17), said arms (16) being susceptible of being extended to come into contact with said bale (3) when said bale (3) is in the upper stacking position.

3. Accumulator (1), according to any of the preceding claims, comprising at least one pair of slide rails (4) of said carriages (5a, 5b), vertically disposed in opposition to each other on the structures on the sides (17) of said compartment (6), said rails (4) allowing said carriages (5a, 5b) to move from said lower loading position to said upper stacking position and vice versa.

4. Accumulator (1), according to any of claims 1 to 34, comprising a rear stopper (12) to grasp the bales (3) in the interior of said compartment (6) while said accumulator (1) is towed by a tractor.

5. Accumulator (1), according to claim 4, wherein said rear stopper includes at least one door (12) joined in an articulated manner to the exit of said compartment (6), said door (12) being susceptible of being opened to release a stack (13) of bales (3a, 3b) from the interior of said compartment (6) while said accumulator (1) is being towed by the tractor.

6. Accumulator (1), according to any of claims 1 to 5, comprising a draw bar (9) to join said frame (2) to the tractor's drive train in an articulated manner, said accumulator (1) being susceptible of becoming misaligned with respect to the tractor to facilitate the entry of a bale (3) in the interior of said compartment (6).

7. Accumulator (1), according to any of claims 3 to 6, wherein said frame (2, 17) comprises a structure (8) disposed in a bridge-like manner between the structures on the sides (17) of said compartment (6), said structure (8) determining the upper limit of the entrance of said compartment (6) in a bridge-like manner.

8. Accumulator (1), according to any of claims 1 to 7, comprising means (10, 11) for guiding the bales (3) to the entrance of said compartment (6).

9. Accumulator (1), according to claim 8, wherein said means for guiding the bales comprise a pair of guides (10) horizontally disposed on either side of said compartment (6).

10. Accumulator (1), according to claim 8, wherein said means for guiding the bales comprise at least one guide (11) that projects from the compartment (6) for guiding the bales (3) towards the entrance while the accumulator (1) is being towed by the tractor.

## Patentansprüche

1. Sammler (1) für Heuballen (3) mit einem Rahmen (2), der ausgebildet ist, um über einen Heuballen (3), der auf dem Boden liegt, geschleppt und positioniert zu werden, wobei der Rahmen (2, 17) eine Einrichtung zum Halten und vertikalen Anheben eines Ballens (3a) vom Boden weg in eine obere Stapelposition aufweist, **dadurch gekennzeichnet, dass** die Einrichtung (5, 14, 15) zum vertikalen Anheben des Ballens (3a) zumindest ein Paar vertikaler Gleitschlitten (5a, 5b) der Ballenhalteeinrichtung (14) aufweist, wobei die Schlitten (5a, 5b) gegenüber voneinander an den Seiten eines Haltefachs (6) eines Ballens (3) angeordnet sind, wobei die Ballenhalteeinrichtung zumindest zwei Greifarme (14) aufweist, die jeweils in einer gelenkartigen Weise mit jedem der Gleitschlitten (5a) verbunden sind, wobei die Greifarme (14) ausgefahren werden können, um mit dem Ballen (3) in Kontakt zu kommen, wenn der Ballen (3) in das Innere des Fachs (6) gelangt, wobei der Sammler außerdem eine Einrichtung (16) zum Aufhängen des Ballens (3a) in der oberen Stapelposition im Inneren des Fachs (6), während die Schlitten (5a, 5b) sich in Richtung einer unteren Ladeposition bewegen, um einen neuen Ballen (3b) aufzunehmen, aufweist, wobei die Greifarme zurückgezogen werden können, um den Eingang des Fachs (6) freizumachen, um den neuen Ballen (3b) aufzunehmen, während die Gleitschlitten (5a, 5b) in der unteren Ladeposition in Bereitschaft bleiben.

2. Sammler (1) gemäß Anspruch 1, bei dem die Einrichtung zum Aufhängen des Ballens in der oberen Stapelposition zumindest zwei Greifarme (16) aufweist, die in einer gelenkartigen Weise mit Strukturen (8) an den Seiten des Aufnahmefachs (6) des Ballens (3) des Rahmens (2, 17) verbunden sind, wobei die Arme (16) ausgefahren werden können, um mit dem Ballen (3) in Kontakt zu kommen, wenn sich der Ballen (3) in der oberen Stapelposition befindet.

3. Sammler (1) gemäß einem der vorherigen Ansprüche, der zumindest ein Paar von Gleitschienen (4) der Schlitten (5a, 5b) aufweist, die vertikal gegenüber voneinander an den Strukturen an den Seiten (17) des Fachs (6) angeordnet sind, wobei die Schienen (4) es erlauben, dass sich die Schlitten (5a, 5b) von der unteren Ladeposition in die obere Stapelposition und umgekehrt bewegen können.

4. Sammler (1) gemäß einem der Ansprüche 1 bis 3, der einen hinteren Anschlag (12) aufweist, um die Ballen (3) im Inneren des Fachs (6) zu greifen, während der Sammler (1) durch einen Traktor geschleppt wird.

5. Sammler (1) gemäß Anspruch 4, bei dem der hintere Anschlag zumindest eine Tür (12) aufweist, die in einer gelenkartigen Weise mit dem Ausgang des Fachs (6) verbunden ist, wobei die Tür (12) geöffnet werden kann, um einen Stapel (13) von Ballen (3a, 3b) aus dem Inneren des Fachs (6) abzugeben, während der Sammler (1) durch den Traktor geschleppt wird.

6. Sammler (1) gemäß einem der Ansprüche 1 bis 5, der einen Zugbalken (9) aufweist, um den Rahmen (2) in einer gelenkartigen Weise mit dem Triebstrang des Traktors zu verbinden, wobei der Sammler (1) in Bezug auf den Traktor fehlausgerichtet werden kann, um den Eintritt eines Ballens (3) in das Innere des Fachs (6) zu erleichtern.

7. Sammler (1) gemäß einem der Ansprüche 3 bis 6, bei dem der Rahmen (2, 17) eine Struktur (8) aufweist, die in einer brückenartigen Weise zwischen den Strukturen an den Seiten (17) des Fachs (6) angeordnet ist, wobei die Struktur (8) die obere Grenze des Eingangs des Fachs (6) in einer brückenartigen Weise bestimmt.

8. Sammler (1) gemäß einem der Ansprüche 1 bis 7, der eine Einrichtung (10, 11) zum Führen der Ballen (3) zu dem Eingang des Fachs (6) aufweist.

9. Sammler (1) gemäß Anspruch 8, bei dem die Einrichtung zum Führen der Ballen ein Paar von Führungen (10) aufweist, die horizontal auf beiden Seiten des Fachs (6) angeordnet sind.

10. Sammler (1) gemäß Anspruch 8, bei dem die Einrichtung zum Führen der Ballen zumindest eine Führung (11) aufweist, die sich von dem Fach (6) zum Führen der Ballen (3) in Richtung des Eingangs erstreckt, während der Sammler (1) durch den Traktor geschleppt wird.

## Revendications

1. Accumulateur (1) de balles de foin (3) comprenant un châssis (2) configuré pour être tracté et positionné au-dessus d'une balle de foin (3) reposant au sol, ledit châssis (2, 17) comprenant des moyens pour tenir et lever verticalement une balle (3a) du sol vers une position supérieure d'empilage, **caractérisé en ce que** lesdits moyens (5, 14, 15) pour lever la balle verticalement (3a) comprennent au moins une paire de chariots verticaux à coulisse (5a, 5b) desdits moyens de maintien des balles (14), lesdits chariots (5a, 5b) étant disposés en opposition l'un par rapport à l'autre sur les côtés d'un compartiment de maintien (6) d'une balle (3), lesdits moyens de maintien de balles comprenant au moins deux bras de prise (14), chacun desquels étant joint de manière articulée à chacun desdits chariots à coulisse (5a), lesdits bras de prise (14) étant susceptibles de s'étendre pour venir en contact avec ladite balle (3) lorsque ladite balle (3) entre à l'intérieur dudit compartiment (6), l'accumulateur comprenant également des moyens (16) pour suspendre ladite balle (3a) dans ladite position supérieure d'empilage à l'intérieur dudit compartiment (6) alors que lesdits chariots (5a, 5b) se déplacent vers une position inférieure de chargement afin de recevoir une nouvelle balle (3b), lesdits bras de prise étant susceptibles de se rétracter pour libérer l'entrée dudit compartiment (6) afin de recevoir ladite nouvelle balle (3b) alors que lesdits chariots à coulisse (5a, 5b) restent en attente dans la position inférieure de chargement.

2. Accumulateur (1), selon la revendication 1, dans lequel lesdits moyens pour suspendre la balle dans la position supérieure d'empilage comprennent au moins deux bras de prise (16) joints de manière articulée à des structures (8) sur les côtés du compartiment de réception (6) de la balle (3) dudit châssis (2, 17), lesdits bras (16) étant susceptibles de s'étendre pour entrer en contact avec ladite balle (3) lorsque ladite balle (3) est dans la position supérieure d'empilage.

3. Accumulateur (1), selon une quelconque des revendications précédentes, comprenant au moins une paire de rails à coulisse (4) desdits chariots (5a, 5b), disposés verticalement en opposition l'un par rapport à l'autre sur les structures de chaque côté (17) dudit compartiment (6), lesdits rails (4) permettant auxdits chariots (5a, 5b) de se déplacer de ladite position inférieure à ladite position supérieure d'empilage et vice versa.

4. Accumulateur (1), selon une quelconque des revendications 1 à 3, comprenant un butoir arrière (12) pour saisir les balles (3) à l'intérieur dudit compartiment (6) alors que ledit accumulateur (1) est tracté par un tracteur.

5. Accumulateur (1), selon la revendication 4, dans lequel ledit butoir arrière comprend au moins une porte (12) jointe de manière articulée à la sortie dudit compartiment (6), ladite porte (12) étant susceptible d'être ouverte pour relâcher une pile (13) de balles (3a, 3b) de l'intérieur dudit compartiment (6) alors que ledit accumulateur (1) est tracté par le tracteur.

6. Accumulateur (1), selon une quelconque des revendications 1 à 5, comprenant une barre d'attelage (9) pour joindre ledit châssis (2) à la transmission du tracteur de manière articulée, ledit accumulateur (1) étant susceptible de se désaligner par rapport au tracteur pour faciliter l'entrée d'une balle (3) à l'intérieur dudit compartiment (6).

7. Accumulateur (1), selon une quelconque des revendications 3 à 6, dans lequel ledit châssis (2, 17) comprend une structure (8) disposée à la manière d'un pont entre les structures des côtés (17) dudit compartiment (6), ladite structure (8) déterminant la limite supérieure de l'entrée dudit compartiment (6) à la manière d'un pont.

8. Accumulateur (1), selon une quelconque des revendications 1 à 7, comprenant des moyens (10, 11) pour guider les balles (3) vers l'entrée dudit compartiment (6).

9. Accumulateur (1), selon la revendication 8, dans lequel lesdits moyens de guidage des balles comprennent une paire de guides (10) disposés horizontalement de chaque côté dudit compartiment (6).

10. Accumulateur (1), selon la revendication 8, dans lequel lesdits moyens de guidage des balles comprennent au moins un guide (11) qui dépasse du compartiment (6) pour guider les balles (3) vers l'entrée alors que l'accumulateur (1) est tracté par le tracteur.
